# EUROPEAN PATENT SPECIFICATION

(11) **EP 0 664 193 B1**
(45) Date of publication and mention of the grant of the patent: **30.09.1998**
(21) Application number: 93914986.0
(22) Date of filing: 09.07.1993
(51) Int. Cl.: B29B 11/14, B29C 49/18, B29C 49/20, B29C 49/48, B65D 1/02, B65D 23/10, B65D 25/28

(54) **PRIMARY MOLD OF BOTTLE BODY WITH HANDLE AND METHOD OF MANUFACTURING BOTTLE BODY WITH HANDLE**
URFORM VON FLASCHENKÖRPER MIT GRIFF UND VERFAHREN ZUM HERSTELLEN VON FLASCHENKÖRPER MIT GRIFF
MOULE PRIMAIRE POUR CARAFE DOTEE D'UNE POIGNEE ET PROCEDE DE FABRICATION DE CETTE CARAFE

(43) Date of publication of application: 26.07.1995
(73) Proprietor: YOSHINO KOGYOSHO CO., LTD., Tokyo 136 (JP)
(72) Inventor: AKUTSU, Masao, Yoshino Kogyosho Co., Ltd., Tokyo 136 (JP); OHTA, Akiho, Yoshino Kogyosho Co., Ltd., Tokyo 136 (JP)
(74) Representative: Klingseisen, Franz, Dipl.-Ing.
(86) International application number: JP9300957
(87) International publication number: WO9501859

(56) References cited:
- EP-A- 0 346 518
- EP-A- 0 483 976
- JP-A- 3 005 132
- JP-A- 4 083 629
- JP-A-56 030 828
- US-A- 3 928 522
- US-A- 3 941 542
- PATENT ABSTRACTS OF JAPAN vol. 4, no. 116 (M-27) (598) 19 August 1980 & JP-A-55 074 840 (YOSHINO KOGYOSHO) 5 June 1980
- PATENT ABSTRACTS OF JAPAN vol. 15, no. 272 (M-1134) 10 July 1991 & JP-A-03 092 326 (TOA GOSEI CHEM. IND. CO., LTD. ET AL.) 17 April 1991
- DATABASE WPI Section Ch, Week 8615, Derwent Publications Ltd., London, GB; Class AEB, AN 86-098036 C15! & JP-A-61 043 535 (TOYO SEIKAN KAISHA) 3 March 1986

## Description

The invention relates to a preform of a bottle body with a handle according to the preamble of claim 1.

US-A-3,941,542 discloses such a preform of a bottle body, wherein the wall of the preform has throughout the same thickness and essentially a configuration similar to the final form of the bottle. By pinching shut a portion of the preform, a handled container is made on a free extrusion blow molding machine.

Among sythetic resin made bottles comprising handle pieces, there were such bottles that handle pieces were formed in advance and separately from bodies of bottles and fixed to the bodies thereafter, and there were also such bottles that the handle pieces were placed to certain positions of bodies of bottles when the bodies were formed to final products.

As molding material of sythetic resin made bottles for containing liquid, crystalline sythetic resin such as polyethylene terephtalete resin (PET) is preferable when mechanical strength and sanitation of bottles are concerned.

To form bottls with PET, it is preferable to use a biaxial stretch molding means because such means brings out characteristic of PET that the mechanical strength of the bottle bodies can improve.

As PET-made bottle bodies having handle pieces, there were, for example, such bottles as described in the Japanese patent provisional publication No. 58-99350 and the Japanese utility model publication No. 2-39926. According to a bottle body shown in the Japanese patent provisional publication No. 58-99350, a handle piece is formed individually which comprises an engaging portion such as protrusion and concave at a certain portion thereof, and while the bottle body is formed to its complete shape by blow molding, the engaging portion of the handle piece engages with the certain portion of the bottle body as the bottle body expands, stretches and deforms. According to a bottle body shown in the Japanese utility model publication No. 2-39926, a handle piece is provided as such that a pair of concaves are formed at the both sides of the back portion of the bottle body, and a pair of the concaves functions as a handle piece.

However, according to the former prior art that the seperately formed handle piece is engaged with the bottle body as the bottle body expands and deforms, the engagement of the handle piece and the bottle body is not always tight enough, so that it is desired that the engagement thereof should be strengthened. To strengthen the engagement between the handle piece and the bottle body, there is an idea that the blow pressure for forming the bottle body be increased. However, as the blow pressure is increased, some problems arise that the engaging portion of the bottle body with the handle piece cracks and the bottle body irregularly deforms caused by the high pressure.

When a separately formed handle piece is engaged with a bottle body which will be stretched by biaxial blow molding, the biaxial stretch blow molding becomes a insert molding style, so that the structure of a mold for forming the bottle body will be complicated and that an molding operation thereof will be difficult.

According to the latter prior art that the handle piece is provided at the back of the bottle body by forming a pair of concaves thereto, the handle piece can be unitedly formed with the bottle body, so that it is easier to form the bottle. However, according to this prior art, there is a problem that the handle piece does not satisfactorily funtion as a handle piece, so that it is uneasy to handle the bottle.

Especially, when the bottle body is larger that the volume thereof is as big as 1.5 liter or more, the handle piece which is provided by a pair of concaves cannot function as a handle piece almost at all, so that it is clear that this type of handle piece cannot be applied to the bigger bottles.

Further, according to regular hollow molding bottles (blow molding bottles), there is a handle piece forming means that a part of the bottle body, while blow molding, is bit off by a pair of piece molds which forward from opposite sides in the same direction and make contact with each other, and that the bit off portion naturally adheres tightly forming a handle piece as the molding resin has such adhesive characteristic. However, this process cannot be applied to biaxial stretch blow molding bottles, because a property of resin applicable for the regular stretch blow molding and the biaxial stretch blow molding differ. The resin used for the biaxial stretch blow molding does not have such characteristic that the bit off portion tightly adheres by its own competence.

The present invention is created to resolve the problems the prior art has. It is recognized that in sythetic resin made large-sized bottles, strong mechanical strength is required at the lower half portion of a bottle body rather than the upper half portion thereof. Therefore, the object of the present invention is to provide a large-sized sythetic resin made bottle securing a handle piece to the bottle body a lower half portion thereof is made mechanically stronger as it is molded by biaxial stretch blow molding.

### The Description of the Present Invention

This object is achieved by the features in the characterizing part of claim 1.

According to this preform , the lower body blank portion can be wide spreaded in the upper direction shaping like a cylindrical trapezoid come having a bottom wall.

It is desired that the lower body blank portion gardually increases its wall thickness as it reaches to the bottom.

A method of manufacturing a bottle body with a handle according to the present invention comprises two processes.

The first process is such that a preform is formed by a hollow molding. The preform comprises an upper body which is a final product of a bottle comprising a handle piece at the backside thereof, and a lower body blank portion unitedly formed at the bottom of said upper body. The lower body blank portion is composed of a thicker wall and is shaped like a cylinder having a bottom wall.

The second process is such that a lower body is formed by a biaxial stretch blow molding from the lower body blank portion while the upper body is being held to prevent deformation thereof. The lower body is shaped like a cylinder having a bottom wall and it comprises a bottom portion at the bottom thereof comprising a leg portion.

The function of the present invention will be described hereinafter, wherein the expression "preform" is replaced by "primary mold".

A primary mold, which will be formed into a bottle body by biaxial stretch blow molding, comprises a upper body and a lower body blank portion. The upper body is composed of a body wall comprising a handle piece at the backside thereof, a shoulder portion and a mouth tube. The upper body of the primary mold has been shaped to a final product, and only the lower body blank portion is stretched by biaxial stretch blow molding and is formed as a bottle.

The primary mold is shaped almost like a final product of a bottle, so that the molding means for such primary mold should preferably be the hollow molding (blow molding). By molding the primary mold by the hollow molding means, a handle piece can easily be formed unitedly at the backside of a bottle body like blow mold bottles of prior art.

The wall of the lower body blank portion of the primary mold is arranged thicker than that of the upper body for the reason that the lower body blank portion will be stretched thereafter, so that the wall of the lower body, after completion of the biaxial stretch blow molding, is has enough thickness that provides enough mechanical strength to the final product of the bottle.

By forming the lower body blank portion a cone shape having a bottom wall and extending its diameter gradually in the upper direction, the upper portion of the lower body blank portion can be largely stretched while the biaxial stretch blow molding, so that whole portions of the lower body blank portion can be stretched sufficiently.

The lower body blank portion of the primary mold is arranged such that the wall thereof becomes gradually thicker as it goes in the lower direction, so that while the lower body blank portion is biaxially stretched, the upper portion of the lower body blank portion, which is the hardest portion to stretch among the lower body blank portion, can be stretched sufficiently. Further, since the wall of the bottom portion of the lower body blank portion is arranged sufficiently thick, which is the most stretched part of the lower body blank portion, no portions of the bottom wall, which is largely stretched and forms a leg of the final product of the bottle, will become too thin after completion of the biaxial stretch blow molding.

The final product of the bottle according to the present invention is such that only the lower body is sufficiently stretched in both lateral and longitudinal directions by the biaxial stretch blow molding and the upper body is stretched only in the lateral direction by a regular hollow (blow) molding. Since the upper body of the bottle is much less stretched than the lower body, the mechanical strength of the upper body is weaker than that of the lower body.

However, as a bottle for containing liquid, concerning how the liquid is situated in the bottle and how the bottle is handled, the lower body is required to have higher mechanical strength, so that, in many cases, the upper body is required to have less mechanical strength, and that it is only required to have enough strength to maintain its shape. Therefore, although the upper body is formed simply by the hollow molding, it naturally possesses enough strength required to the upper body.

### Brief description of the invention

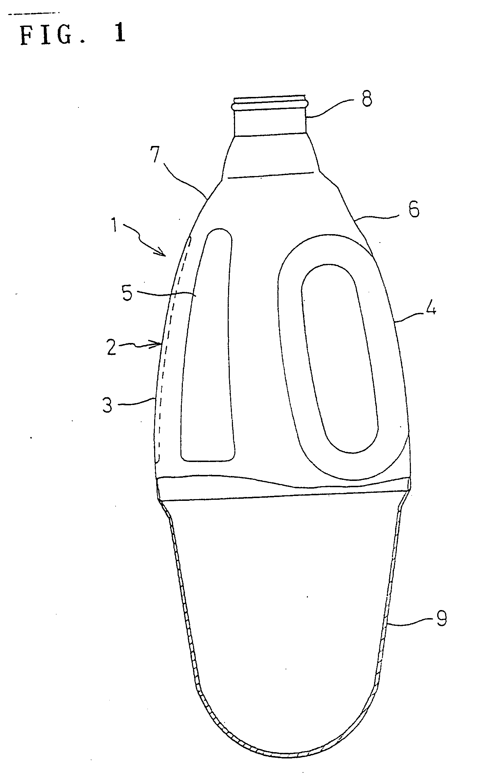

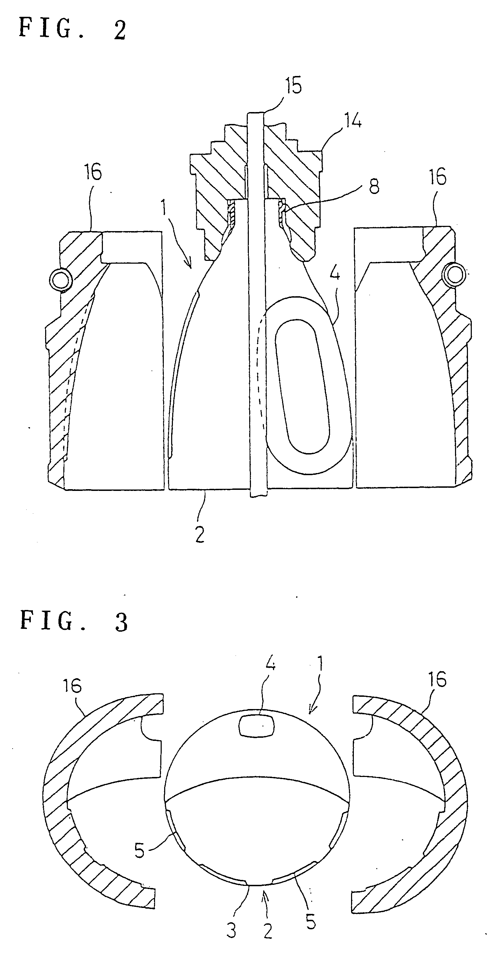

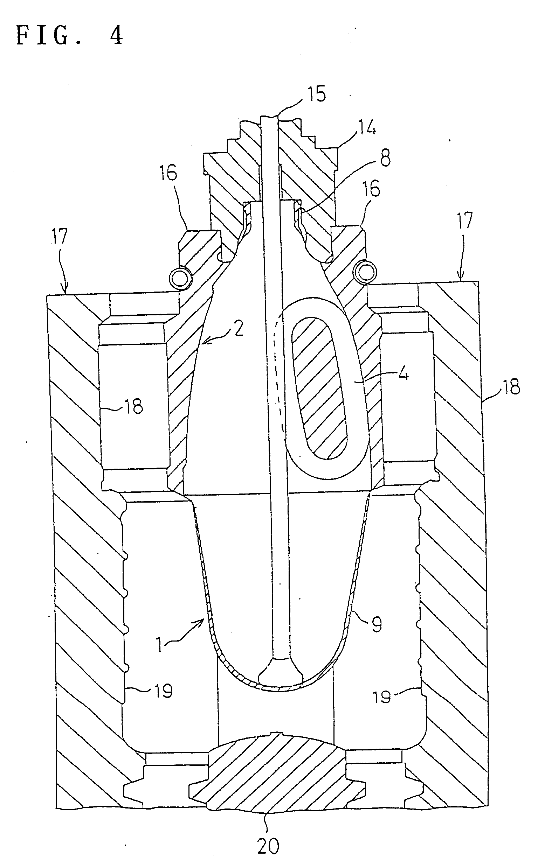

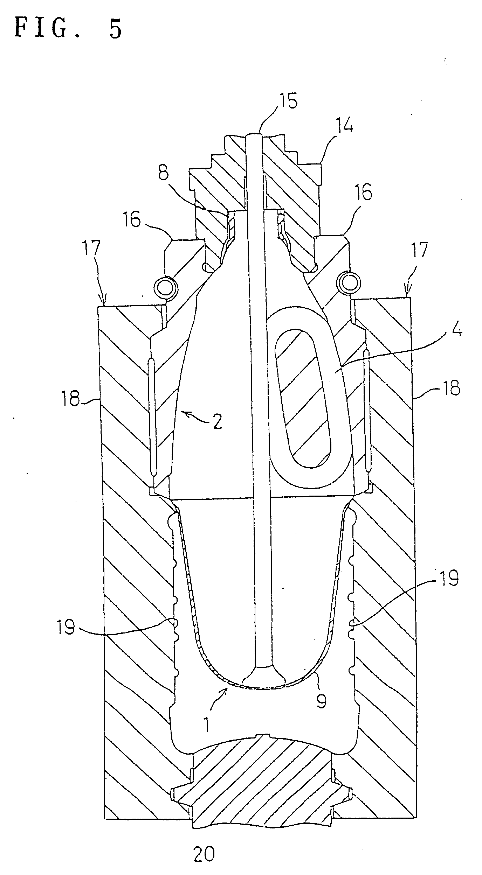

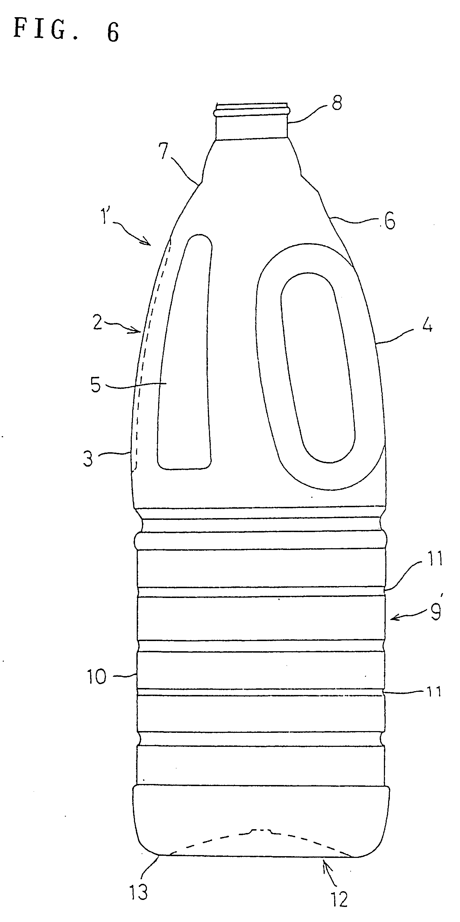

Fig. 1 shows a side elevational view, a lower body blank portion thereof being vertically sectioned, of a preferred embodiment of a primary mold according to the present invention. Fig. 2 shows a vertical sectional view of a upper body of a primary mold according to the present invention being fastened to molds. Fig. 3 shows a transverse sectional view of the primary mold shown in Fig. 2. Fig. 4 shows a vertical sectional view of a primary mold to be fastened to a blow mold and a bottom mold for a biaxial stretch blow molding. Fig. 5 shows the primary mold shown in Fig. 4, being fastened to the blow mold and the bottom mold. Fig. 6 shows a preferred embodiment of a bottle formed by the biaxial stretch blow molding from the primary mold shown in Fig. 1.

### Detailed description of the invention

A preferred embodiment according to the present invention will be described hereinafter referring the drawings.

Fig. 1 shows a side elevational view of a whole primary mold 1 with a vertically sectional view of the lower body blank portion thereof according to the present invention. This primary mold 1 as a whole is unitedly formed by a hollow (blow) molding. The primary mold 1 is composed of a upper body 2 and the lower body blank portion 9 which is unitedly positioned under the upper body 2. The upper body 2 comprises: a handle piece 4 at the backside thereof which is unitedly bridged to the product 1 in the vertical direction; a body wall 3 cylindrically shaped and decresing its diameter in the upper direction; a shoulder portion 7 positioned on the body wall 3 having a cylindrical cone shape formed by a largely sloped taper wall; a mouth tube 8 of a short cyrindrical shape vertically stands on the shoulder 7. The lower body blank portion 9 comprises a half spherical shape of a bottom portion, and it is arranged such that the thickness of the wall thereof gradually increases as it goes to the bottom.

As described above, the primary mold 1 is a hollow (blow) product, so that it is easy to unitedly form the handle piece 4 at the backside of the body wall 3 as it is easily done in prior art.

The body wall 3 of the upper body 2 comprises four reinforcement concave walls 5 vertically caved and placed parellel with each other at the front side thereof to reinforce the mechanical strength of the body wall 3 against the outside pressure. In between the body wall 3 portion right above the handle piece 4 and the shoulder portion 7, a finger concave 6 is formed for positioning a thumb to make easy control of the bottle body 1' when the handle piece 4 is handled by a user's hand.

Fig. 2 to Fig. 5 show an exampler of a process of the biaxial stretch blow molding forming a bottle body 1' from the primary mold 1 shown in Fig. 1. According to this process, a mouth holding mold 14, comprising an extend pin 15 capable of sliding in the upper and the lower directions, is positioned to a part between the mouth tube 8 and the shoulder portion 7 of the primary mold 1, and a pair of upper body holding molds 16, a split die, is positioned all around the upper body 2 of the primary mold 1. The mouth holding mold 14 and a pair of upper body holding molds 16 are secured to the upper body 2 of the primary mold 1 in such manner that they prevent the upper body 2 being stretched by an inner pressure caused by the biaxial stretch blow molding.

The heating time of the primary mold 1 to the temperature suitable for the biaxial stretch blow molding is not limited to a certain time. However, when the mouth holding mold 14 and the upper body holding molds are secured to the primary mold 1, the lower body blank portion 9 thereof is exposed in the air, so that it is advantageous to use such condition and heat only the lower body blank portion 9 to the temperature suitable for the biaxial stretch blow molding.

After the lower body blank portion 9 of the primary mold 1 is heated to the suitable temperature for the biaxial stretch blow molding, a combination article of a pair of blow molds 17 (a split die) and a bottom mold 20 are secured to a combination article of the primary mold 1, the mouth holding mold 14 and the upper body holding mold 16, clamping the primary mold 1 (see Figs. 4 and 5).

The blow mold 17 comprises a clamping mold 18 which is firmly secured to the upper body holding mold 16 fixed to the primary mold 1, a forming surface 19 which forms a lower body 9' from the lower body blank portion 9 along its surface shape, and a bottom mold 20 the upper surface, which is a part of the forming surface, thereof is projected to almost like a spherical shape.

Fig. 6 shows a side elevational view of an example of a bottle body 1' formed from the primary mold shown in Fig. 1 by the biaxial stretch blow molding. The lower body 9' of the bottle body 1', which is formed by biaxially stretching the lower body blank portion 9, is composed of a cylindrical wall 10, which comprises four supporting concaves therearound each of which is rather narrow and shaped like a ditch and positioned at regular intervals, and a bottom portion 12 unitedly formed at the bottom of the cylindrical wall 10, which comprises a leg portion 13 at the edge portion thereof and inner portion thereof is spherically caved inside thereof.

The supporting concaves 11 formed around the cyrindrical wall 10 is such that it improves the mechanical strength of the lower body 9' which receives outer pressure.

The bottle body 1' shown in Fig. 6 is such that the lower body 9' is formed by the biaxial stretch blow molding, so that, comparing a bottle body formed by a regular hollow (blow) molding, the mechanical strength especially shock resistance of the bottom portion 12 including the leg portion 13 is strengthened. Therefore, even when an user accidentally drops the bottle 1' containing liquid therein while handling, the bottom portion 12 including the leg portion 13 could resist against such shock and it would not collapse at all.

The lower body 9' of the primary mold 1 is formed by the biaxial stretch blow molding from the lower body blank portion 9 individually without being affected the shape of the upper body 2, so that any combined shape of the upper body 2 and the lower body 9' can be freely made. For example, the upper body 2 can be formed a regular cylindrical shape and the lower body 9' a polygonal cylindrical shape. Therefore, many unique designs can be applied to the bottle body 1'

### Industrial utilization of the invention

According to the present invention, the upper body of the bottle body is formed by a regular hollow (blow) molding, so that a handle piece is easily formed to the upper body, and that a large sized bottle body comprising a handle piece by the biaxial stretch blow molding is easily made.

Higher mechanical strength is required to the lower body of a bottle body containing liquid therein. The lower body of the bottle body according to the present invention is formed by the biaxial stretch blow molding, so that enough mechanical strength is provided. The upper body of the bottle body is formed by a regular hollow (blow) molding, but only little mechanical strength capable of keeping its own shape is required to the upper body, so that the upper body formed by such regular molding can be provided enough mechanical strength, and that the bottle body is furnished with sufficient function as a bottle body as a liquid container.

The method of manufacturing the primary mold is a regular hollow molding, and the forming means for the lower body of the bottle body is also a regular biaxial stretch blow molding, so that it is easy to form bottles.

The lower body of the primary mold is formed by the biaxial stretch blow molding from the lower body blank portion individually without being affected the shape of the upper body, so that any combined shape of the upper body and the lower body can be freely made. Therefore, many unique designs can be applied to the bottle bodies, which could improve commercial value of the bottle.

## Claims

1. A preform of a bottle with a handle, said preform comprising
an upper body (2) having a shoulder portion (7) in the shape of a cylindrical trapezoid cone, a mouth tube (8) unitedly formed at the top of said shoulder (7) and a handle piece (4) formed like a bridge at the backside of a cylindrically shaped body wall (3);
characterized in that
a lower body blank portion (9) is provided, which has a thicker wall and is unitedly formed at the bottom of said upper body (2) as an essentially half spherical shaped bottom wall.

2. A preform as claimed in claim 1, wherein said lower body blank portion (9) is wide spreaded in the upper direction and is shaped like a cylindrical trapezoid cone having a bottom wall.

3. A preform as claimed in claim 1 or 2, wherein said lower body blank portion (9) gradually increases its wall thickness as it reaches to the bottom.

4. A method of manufacturing a bottle body with a handle comprising:
a process of forming a preform (1) by a hollow molding, said preform (1) comprises an upper body (2) which is a final product of a bottle body (1') comprising a handle piece (4) at the backside thereof, and a lower body blank portion (9) unitedly formed at the bottom of said upper body (2), said lower body blank portion (9) is composed of a thicker wall and is shaped like a cylinder having a bottom wall;
and a process of forming a lower body (9') by a biaxial stretch blow molding from said lower body blank portion (9) while holding said upper body (2) to prevent deformation thereof, said lower body (9') being shaped like a cylinder having a bottom wall and comprises a bottom portion (12) at the bottom thereof comprising a leg portion (13).

## Patentansprüche

1. Vorformling einer Flasche mit einem Griff, wobei der Vorformling umfaßt
einen Oberkörper (2) mit einem Schulterbereich (7) in der Gestalt eines zylindrischen, trapezförmigen Kegels, mit einem Mündungsrohr (8), das an dem Oberteil der Schulter (7) vereinigt ausgebildet ist, und mit einem Griffstück (4), das nach Art einer Brücke an der Rückseite der zylindrisch gestalteten Körperwand (3) ausgebildet ist;
**dadurch gekennzeichnet**, daß
ein Unterkörper-Rohlingbereich (9) vorgesehen ist, der eine dickere Wand besitzt und der an dem unteren Teil des Oberkörpers (2) als eine im wesentlichen halbkugelig gestaltete Bodenwand vereinigt ausgebildet ist.

2. Vorformling nach Anspruch 1, wobei der Unterkörper-Rohlingbereich (9) in der Richtung nach oben weit auseinander gespreizt und wie ein zylindrischer, trapezförmiger Kegel mit einer Bodenwand gestaltet ist.

3. Vorformling nach Anspruch 1 oder 2, wobei der Unterkörper-Rohlingbereich (9) in seiner Wandstärke allmählich zunimmt, bis er den Boden erreicht.

4. Verfahren zum Herstellen eines Flaschenkörpers mit einem Handgriff, umfassend:
ein Verfahren zum Herstellen eines Vorformlings (1) im Wege des Hohlformens, wobei der Vorformling (1) einen Oberkörper (2), der ein Endprodukt eines Flaschenkörpers (1') mit einem Griffstück (4) an seiner Rückseite ist, und einen Unterkörper-Rohlingbereich (9) umfaßt, der an dem unteren Teil des Oberkörpers (2) vereinigt ausgebildet ist, wobei der Unterkörper-Rohlingbereich (9) aus einem dickeren Material besteht und nach Art eines Zylinders mit einer Bodenwand gestaltet ist;
und ein Verfahren zur Herstellung bzw. Ausbildung eines Unterkörpers (9') im Wege eines biaxialen Streckblasformens aus dem Unterkörper-Rohlingbereich (9), während der Oberkörper (2) gehalten wird, um dessen Deformation zu verhindern, wobei der Unterkörper (9') nach Art eines Zylinders mit einer Bodenwand gestaltet wird und einen Bodenbereich (12) an seinem unteren Ende umfaßt, der einen Bein- bzw. Fußbereich (13) umfaßt.

## Revendications

1. Préforme d'une bouteille avec une poignée, cette préforme comprenant :
un corps supérieur (2) avec une portion d'épaulement (7) sous la forme d'un cône trapézoïdal cylindrique, un tube d'embouchure (8) formé de façon solidaire sur le sommet de l'épaulement (7) et une partie de poignée (4) formée à la manière d'un pont sur le côté arrière d'une paroi de corps cylindrique (3) ;
caractérisée en ce qu'il est prévu
une portion d'ébauche de corps inférieur (9) qui présente une paroi de plus grande épaisseur et qui est formée solidairement sur le fond du corps supérieur (2) sous forme de paroi inférieure sensiblement de forme semisphérique.

2. Préforme selon la revendication 1, dans laquelle la portion d'ébauche de corps inférieur (9) est élargie dans la direction supérieure et se présente sous forme de cône trapézoïdal cylindrique avec une paroi de fond.

3. Préforme selon la revendication 1 ou 2, dans laquelle la portion d'ébauche de corps inférieur (9) augmente progressivement son épaisseur de paroi à mesure qu'elle atteint le fond.

4. Procédé pour la fabrication d'un corps de bouteille avec une poignée comprenant :
un procédé consistant à réaliser une préforme (1) par moulage creux, cette préforme (1) comprend un corps supérieur (2) qui est un produit final d'un corps de bouteille (1') comprenant un élément de poignée (4) sur son côté arrière, une portion d'ébauche de corps inférieur (9) formée solidairement sur le fond du corps supérieur (2), cette portion d'ébauche de corps inférieur (9) est composée d'une paroi plus épaisse et a la forme d'un cylindre avec une paroi de fond ;
et un procédé pour former un corps inférieur (9') par moulage par soufflage et étirement biaxial à partir de la portion d'ébauche de corps inférieur (9) tout en maintenant le corps supérieur (2) pour empêcher sa déformation, le corps inférieur (9') ayant la forme d'un cylindre avec une paroi de fond et comprend une portion de fond (12) sur son fond comprenant une portion de pied (13).
